Europäisches Patentamt

European Patent Office

Office européen des brevets

(11) Publication number: **0 297 877**
A2

# EUROPEAN PATENT APPLICATION

(21) Application number: 88305966.9

(22) Date of filing: 28.06.88

(51) Int. Cl.⁴: **B 01 L 3/02**
G 01 N 35/06

(30) Priority: 03.07.87 JP 165229/87
07.07.87 JP 167714/87

(43) Date of publication of application:
04.01.89 Bulletin 89/01

(84) Designated Contracting States: DE FR GB

(71) Applicant: KONICA CORPORATION
No. 26-2, Nishishinjuku 1-chome Shinjuku-ku
Tokyo 160 (JP)

(72) Inventor: Toura, Kosuke
c/o Konica Corporation 1 Sakura-machi
Hino-shi Tokyo (JP)

Ishihara, Takashi
c/o Konica Corporation 1 Sakura-machi
Hino-shi Tokyo (JP)

Sugiyama, Nobuaki
c/o Konica Corporation 1 Sakura-machi
Hino-shi Tokyo (JP)

(74) Representative: Ben-Nathan, Laurence Albert et al
Urquhart-Dykes & Lord 91 Wimpole Street
London W1M 8AH (GB)

(54) Sample liquid dropping container and using method therefor.

(57) In order to achieve accurate, simple and sanitary method of dropping sample liquids, the invention provides a sample liquid dropping container which has a container body for accommodating sample liquid, a lid for airtightly closing an opening of the container body. The sample liquid dropping container has at least two pieces of through holes of which the first one is an air vent hole for injecting air into the container and second one is a dropping hole for dropping the accommodated sample liquid. The diameter of each holes is made to be small enough to prevent the accommodated sample liquid from leakage through the holes under the internal atmospheric pressure of the container.

FIG. 2

# Description

## Sample Liquid Dropping Container and Using Method Therefor

### FIELD OF THE INVENTION

The present invention relates to a dropping container used in an analyzing device in which components contained in a sample liquid such as blood serum or the like are analyzed. and also related to a method of using therefor.

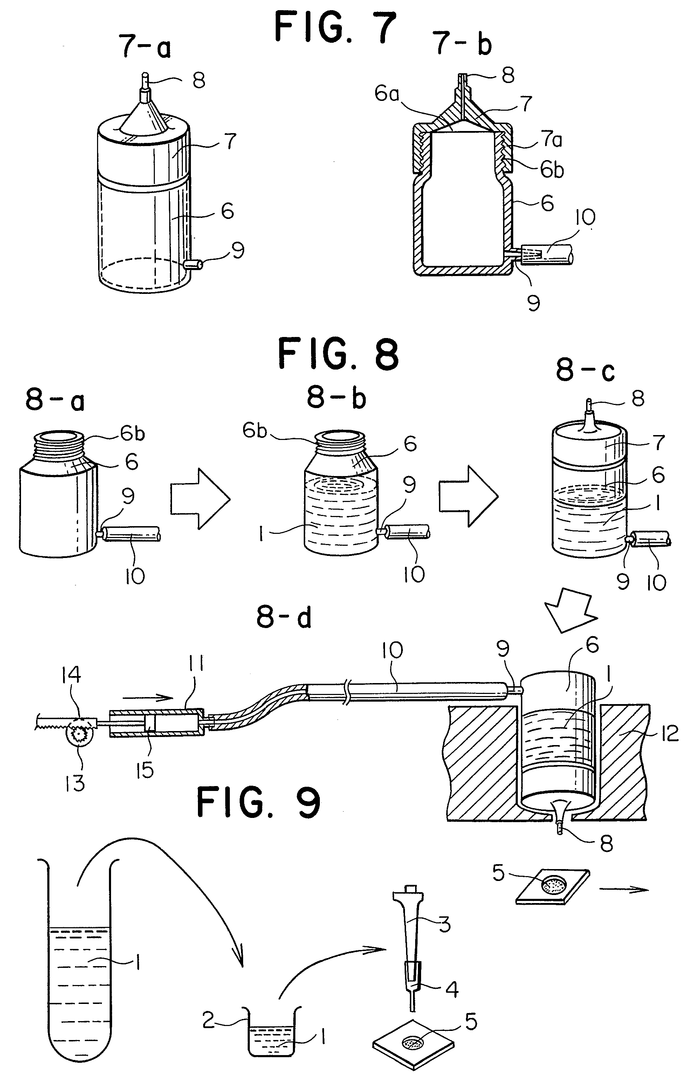

Heretofore, there has been known a dry chemistry method for analyzing specific components contained in serum, plasma or whole blood. When the method is used for analyzing specific components, sampled blood is separated into serum and blood corpuscle component or into plasma and blood corpuscle component by means of a centrifugal separator as shown in Fig. 9, and then serum or plasma in the necessary amount for analyses is transferred to container 2 as sample liquid 1 for a while. In some cases, however, sampled blood is used as sample liquid 1 occasionally without being separated into components. Then, sample liquid 1 in extremely small quantities is taken out from a sampling tube or from container 2 by the use of pipette 3. Namely, tip 4 is attached to the tip portion of pipette 3 and the point of tip 4 is soaked once in sample liquid 1 for the purpose of sucking in sample liquid 1 by a prescribed quantity (e.g. 10μl) which is dropped on film 5 containing reagents. The reagents and sample liquid 1 both on the film 5 are subjected to the color reaction under certain conditions (temperature and time) and the change of color caused by the reaction tells an amount of specific component contained in sample liquid 1. When inspecting other different sample liquid, the tip 4 is required to be replaced for preventing the previous liquid from being mixed.

Pipette 3 in the figure may be either one-step type pipette wherein it is possible, with a single push, to drop the sample liquid in a fixed amount, or two-step type one, or in addition to that, there has also been known the continuous type pipette wherein sample liquids sucked in a cylinder are dropped continuously in the way that each stroke of a piston pushes out a fixed amount of sample liquid.

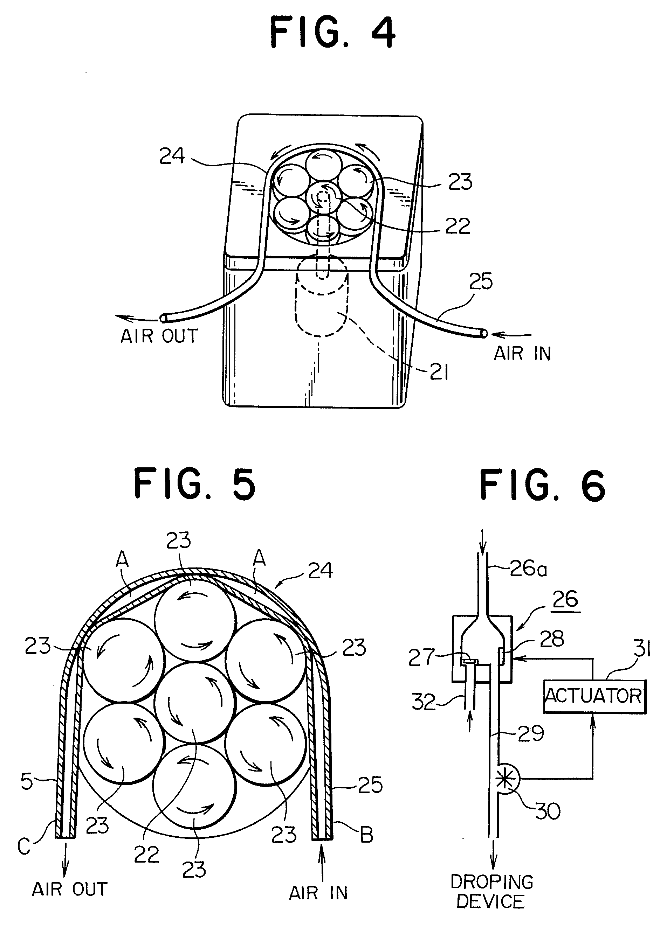

Further, there have been suggested various types of analyzing devices wherein a dry chemistry method is employed. For example, the inventor of the present invention has suggested a biochemical analyzing device comprising a conveying means for conveying reagent slides, an inserting means for inserting reagent slides into the conveying means, a dropping portion for dropping a sample to be tested on a reagent slide on the conveying means, a photometry means for the photometry of the reagent slide on the conveying means, and an ejecting means for ejecting the reagent slide from the conveying means, wherein the existence of a specific component, contents thereof, or the activity of enzyme are chemically analyzed (Japanese Patent Application No. 39875/1985). Even when dropping a sample liquid on a dropping portion of this device, a pipette of a one-step type or a two-step type shown in Fig. 6 and a pipette of a continuous type are used.

In the dropping method mentioned above, however, it is necessary to soak the tip 4 in the sample liquid 1 for sucking in the sample, therefore, the sample liquid 1 sticks on the outer circumferential surface of tip 4 and the sticking liquid may drop together with the sample liquid to be dropped for the next analysis, resulting in the inaccurate analysis by the increase of an amount of the dropped sample liquid and by a drop of liquid which fails to be a nice spheric form.

In the past, therefore, it has been necessary to wipe off the sample liquid sticking on the outer circumferential surface of the tip 4 before every dropping.

In the case where the tip 4 is put on the pipette 3 insufficiently, when the sample 1 is sucked in and then the tip 4 further is pushed against the pipette 3, air enters from the point of the tip 4. Since the pipette 3 causes the sample liquid to drop by purging air of a fixed amount, air in the tip 4 causes the inaccurate amount of sample liquid 4 to drop which is less than the prescribed amount. Therefore, it has been necessary to make sure that the tip 4 is properly mounted on the pipette 3 each time the tip 4 is replaced.

Sample liquids such as serum or the like, when they stick to surrounding objects, are not only sanitarily undesirable but also are the obstacle to the accurate measurement when they are mixed with other samples. When dropping the sample in the way shown in Fig. 9, therefore, it has been considerably necessary to be careful not to cause the sample liquid 1 to spill or adhere on other portions.

### SUMMARY OF THE INVENTION

The present invention has been devised from the aforesaid viewpoint and its object is to achieve the accurate, simple and sanitary method for dropping sample liquids. In order to achieve the aforesaid object, a container for the sample and a tip therefor are constituted in one body by providing a dropping hole for dropping sample liquids contained in the container and an air vent both on the container portion that accommodates sample liquids, so that air is injected in the container portion through the air vent and thereby the sample liquid is dropped.

### BRIEF DESCRIPTION OF THE DRAWINGS

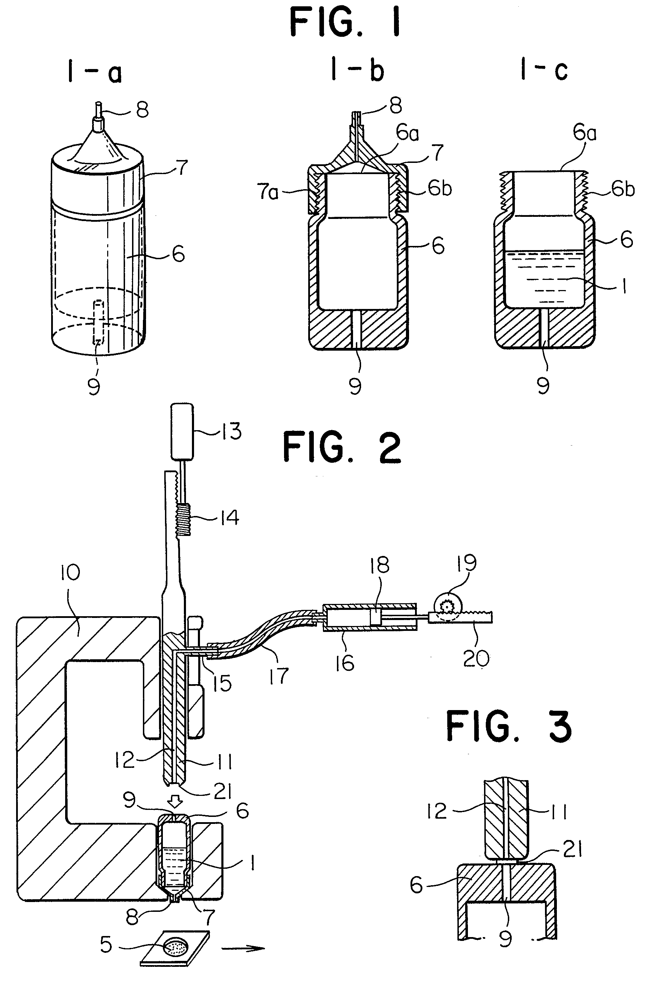

Figs. 1 (a) - (c) show a perspective view of a dropping container of the invention and sectional views, Fig. 2 is a diagram showing an example of a dropping device, Fig. 3 is an enlarged sectional view of an air vent and its surroundings, Figs. 4 - 6 are diagrams showing other examples of air-feeding device to be used in a dropping device, Fig. 7(a) is a perspective view of other example of a sample liquid dropping device of the invention, Fig. 7(b) is a sectional view of the same, Figs. 8(a) - (d) are the diagrams showing how to use the dropping container shown in Fig. 7 and Fig. 9 is an illustration of a conventional sample dropping work.


DETAILED DESCRIPTION OF THE INVENTION


The invention will be explained as follows, referring to the drawings.

Fig. 1(a) is a perspective view of an example of a sample liquid dropping container of the invention, Fig. 1(b) is a sectional view thereof and Fig. 1(c) is a constitutional diagram wherein sample liquids are contained.

In the figure, the numeral 6 represents a container main body, 7 is a lid whose tip portion is equipped with dropping hole 8 for dropping sample liquid 1 and 9 is an air vent provided on the bottom of container main body 6.

A container portion that accommodates sample liquids 1 is formed with container main body 6 and lid 7 both of which are made of translucent and stout material that is not easily deformed (fiber reinforced plastic, glass etc.) so that the sample liquid 1 contained therein may be recognized through them from outside visually.

Container main body 6 is cylindrical in shape with its diameter of about 10 mm and its upper portion is equipped with opening 6a through which the sample liquid 1 may be poured in container main body 6 as shown with an arrow mark in Fig. 1(c). On the outer circumferential surface at upper portion of container main body 6, there is formed screw portion 6b. On the inner circumferential surface of lid 7, there is formed screw portion 7a which makes it possible. together with screw portion 6b of container main body 6, to remove lid 7 freely from container main body 6 and to unite both of them on an air-tight basis.

The diameter of air vent 9 is determined to be small enough so that the sample liquids are prevented, by their surface tension, from leaking out. It is about 0.5 mm in the example in the figure. Further, the length of air vent 9 is made long enough by increasing the thickness of the bottom portion of container main body 6. Thus, the broadened surface area of air vent 9 causes the sample liquid 1 not to leak out easily.

Likewise, the inside diameter of dropping hole 8 is determined to be small enough so that the sample liquid 1 may be prevented by its surface tension from leaking out when sample liquid 1 is poured in container main body 6 and it is turned upside down after the lid 7 is tightened thereon.

When performing the dropping work using the dropping container mentioned above, the lid 7 is to be removed first from the container main body 6 and the sample liquids in prescribed amount are to be poured through the opening 6a. An amount of the sample liquids 1 is about 0.3 cc, for example, though it depends on the number of incidences of inspection. After that, the lid 7 is to be tightened to make the container main body 6 to be air-tight. Then, the container is turned upside down and fixed on the prescribed dropping device and air in a fixed amount is injected therein through the air vent 9. Thereby, the sample liquids in a fixed amount (e.g. 10μl) are dropped.

Fig. 2 shows an example of a dropping device.

In the figure, 10 is a main body of a device, 11 is an air injecting tube through which the air path 12 is formed, 13 is a motor that moves the air injecting tube 11 up and down through gear 14, 15 is a nozzle interlinked to air path 12, 16 is an air-feeding cylinder interlinked to nozzle 15 through tube 17, 18 is an air-feeding piston and 19 is an air-feeding motor that drives piston 18 through gear 20.

When dropping the sample liquid 1, the container is mounted, with its dropping hole 8 facing downward, on the main body 10. Even if the container is turned upside down, the sample liquid 1 does not leak out because the inside diameter of dropping hole 8 is small. Then, the motor 13 is driven and the tip portion of the air injecting tube 11 is pushed against the air vent 9. As shown in Fig. 3, packing 21 is provided on the tip portion of air injecting tube 11 and thereby the air leak is prevented. Then, the air-feeding piston 18 is caused to make its stroke of the length in a fixed amount by the air-feeding motor 19 for expelling air in the cylinder 16, and thereby the sample liquid 1 in a fixed amount (10μl) is dropped on the film 5. After that, the film 5 is conveyed by the conveying portion (not illustrated) of the device and the next film is moved and positioned to the location right beneath the dropping hole 8 for the next dropping. When the film 5 is changed successively in the aforesaid way, it is possible to measure continuously using the sample liquid 1 poured at same time in the container, which makes it possible to inspect many items. After the completion of the inspection of predetermined items, the sample liquid is thrown away together with its dropping container and another sample liquid is inspected with a new container.

The dropping device as the one mentioned above is more effective when it is provided on the dropping portion of a biochemical analyzing device (Japanese Patent Application No. 39875/1985) stated above and so on.

On the dropping device shown in Fig. 2, air is injected by means of air-feeding piston 18. However, other air-feeding device may also be used. Fig. 4 shows an example of the other air-feeding device wherein 21 is a pulse motor for driving, 22 is a driving roller made of resin which is driven by the pulse motor 21, 23 is an interlocking roller made of resin which contacts the driving roller 22 with pressure and makes its revolution around the driving roller 22 while making its rotation being driven by the rotation of the driving roller 22, 24 is a groove and 25 is an air-feeding tube a part of which is positioned in the groove 24. The air-feeding tube 25 is made of rubber and its outside diameter is about 5mm and inside diameter is about 3mm, while, the diameter of driving roller 22 and that of interlocking roller are about 20mm respectively. As is shown in Fig. 5, a part of the portion of the air-feeding tube 25 positioned in the groove 24 is pressed by the interlocking roller 23, resulting in the squeezed hollow portion of the air-feeding tube 25, thus air A in a fixed amount is confined in a part of the air-feeding tube 25 that is sandwiched between a pair of interlocking rollers adjoining each other. When the driving roller 22 is driven by the pulse motor 21, interlocking rollers 23 move while they push the air-feeding tube 25, and air entering through inlet B of the air-feeding tube 25 is confined by interlocking rollers 23 to be in fixed amount (See A in Fig. 5.) and is fed to the outlet C of the air-feeding tube 25. When the outlet C of the air-feeding tube 25 is connected to the nozzle 15 of the dropping device in Fig. 2 and the revolution of the pulse motor 21 is regulated, air in a fixed amount can be fed to the dropping container.

In the example stated above, air in a fixed amount is fed out by regulating the number of revolutions of the pulse motor 21. However, it is also possible to regulate an amount of air through the air valve shown in Fig. 6. Namely, air may be fed to the dropping device through the pipe 29 in Fig. 6 when the valve 27 of air valve 26 is closed and the valve 28 thereof is opened under the condition that air is constantly injected through the inlet 26a of the air valve 26 by an air-feeding device of a roller type shown in Fig. 4 and Fig. 5 or by an ordinary compressor. The flow rate of the air to be fed to the dropping device is measured by the flow meter 30 provided on the pipe 29, and when the flow meter detects that air in a fixed amount is being fed, the flow meter generates the control signal which is transferred to the actuator 31 that closes the valve 28, thus the air-feeding to the dropping device is suspended. On the other hand, the valve 27 is opened and air is discharged outside through the pipe 32.

With respect to air feeding device, it is naturally possible to use a conventional type such as a pipette wherein air is fed manually, in place of an automatic air feeding device stated above.

In the way mentioned above, it is possible to transfer the sample liquid 1 to the container easily and it is possible, by closing the lid 7, to avoid that the sample liquid 1 is spilt out due to the careless work or the vibration of the device, which requires, unlike in the past, no attention to handling. Further, when the container is turned upside down and air is fed, it is possible to drop the sample liquid 1 in a fixed amount continuously without dipping the dropping hole 8 in the sample liquid 1, thus, it is not necessary at all to wipe the dropping hole for each dropping, which is different from the conventional type.

In the conventional dropping method, the sample liquid 1 has not been dropped at the center of the film 5 occasionally due to unintentional movement of hands of an inspector. However, when the dropping container of the invention is attached on the device shown in Fig. 2 for dropping the sample, it is possible to drop the sample liquid 1 at the center of the film 5 accurately.

The air vent 9 of a dropping container of the invention can be provided in a form of a nozzle on the side of the container main body 6 as shown in Fig. 7. In this case, it is possible to insert the nozzle of air vent 9 directly into the tube 17 in Fig. 2 and to inject air into the container.

In the invention, as stated above, owing to the arrangement wherein a dropping hole and an air vent are provided on the container portion that accommodates the sample liquid and the sample liquid is dropped when injecting air through the air vent into the container portion, it is possible to drop the sample liquid in a fixed amount continuously and accurately when feeding air after the container is turned upside down and attached on the prescribed location of an analyzing device, which causes no dispersion in measured values based on the difference between inspectors. Further effect of accurate and simple dropping work is also obtained because it is not necessary, unlike in the past, to wipe the dropping hole for each dropping. In addition to the above, the dropping work may be carried out sanitarily because the sample liquid does not run out of the container.

Incidentally, since the inside diameter of the air vent provided on the dropping container is small, the sample liquid does not flow out of the container owing to an effect of the surface tension. However, when a vibration or an accidental force is applied on the container during the inspection, a leakage of the sample liquid through the air vent may also be feared. Such leakage of the sample liquid is not only undesirable from the viewpoint of sanitation but also attributable to inaccurate results of inspection when the leaked sample liquid is mixed with other liquid.

The invention has been devised additionally in view of the aforesaid background and its another object is to prevent surely the sample liquid from flowing out through the air vent. In order to achieve the object, in a method for using a sample liquid dropping container comprising a container main body equipped with an air vent and its lid equipped with a dropping hole, wherein both are capable of being engaged airtightly each other or being disengaged, the method has been improved so that sample liquids are poured into the container after an air-feeding tube whose one end being closed is connected to aforesaid air vent, then aforesaid lid is tightened and the container is turned upside down and fixed on a fixing stand, then air is injected into the container through aforesaid air-feeding tube and thereby the sample liquid is dropped from aforesaid dropping hole.

For this method, it may be preferred to use the sample liquid dripping container as shown in Fig. 7, wherein the air vent 9 is formed to be a nozzle form so that air-feeding tube 10 may be inserted as shown in Fig. 7(b).

The method for using aforesaid container will be explained as follows, referring to Fig. 8.

First, as shown in Fig. 8(a), air-feeding tube 10 is inserted into air vent 9 and then the sample liquids 1 are poured in the container as shown in Fig. 8(b). An amount of sample liquid 1 is about 0.3cc, for example, though it depends on the number of inspection occasions. After that, as shown in Fig. 8(c), container main body 6 is closed airtightly by tightening the lid 7. With such container covered airtightly, the sample liquid 1 does not flow out of the container, and the sample liquid does not leak from the air vent 10 because an end of the air-feeding tube 10 opposite to the end inserted into the air vent 9 is connected to cylinder 11 as shown in Fig. 8(d) and thereby the air vent 9 comes under the closed condition.

Then, the container is turned upside down as shown in Fig. 8(d) and attached to fixing stand 12 of a prescribed dropping device and air in a fixed amount is injected into the container from the air vent 9 through the air-feeding tube 10. Namely, in the dropping device in Fig. 8(d), piston 15 is caused, by the rotation of motor 13, to make its stroke for the distance in a fixed amount in the direction of an arrow in the figure, thus air in a fixed amount is injected into the container from the cylinder 11. Thereby, the sample liquid 1 in a fixed amount (e.g. $10\mu l$) is dropped on the film 5. After that, the film 5 is transported by the conveyance portion (not shown in the figure) of the device and next film is transported and positioned to the location right beneath the dropping hole 8 for the next dropping of the sample liquid. When the film 5 is changed successively in the aforesaid way, it is possible to measure continuously using the sample liquid 1 of one filling in the container, which makes it possible to inspect many items. After the completion of the inspection of predetermined items, the sample liquid is disposed together with its dropping container and another sample liquid is inspected with a new dropping container.

On the dropping device is Fig. 8(d), air is injected by means of piston 15. However, other different air-feeding means as shown Figs. 4, 5 and 6 may be employed.

In the invention, as stated above, the sample liquid is poured in the container after the air-feeding tube is connected to the air vent on the sample liquid dropping container. Therefore, it is possible to prevent surely the leakage of the sample liquid from the air vent because the air vent is completely closed with the air-feeding tube.

## Claims

1. A sample liquid dropping container comprising a container means having

a body member for accommodating sample liquid, said body member having opening for introducing the sample liquid therein,

a lid being adapted to airtightly close the opening,

said container means being provided with at least two pieces of through holes of which the first one is an air vent hole for injecting air into said container means and the second one is a dropping hole for dropping the accommodated sample liquid, and

the diameter of each of said through holes being small enough to prevent the accommodated sample liquid from leakage therethrough under the internal pressure of said container means.

2. A container according to Claim 1 wherein the air vent hole is provided in said body member and said dropping hole is provided in said lid.

3. A container according to Claim 1 or Claim 2 wherein said lid and said body member have interengageable screw-threaded means for locating the lid on the body member to effect an air-tight closure therebetween.

4. A container according to any of Claims 1 - 3, wherein said body member has a base and a generally cylindrical wall upstanding therefrom, and said opening is provided at the end of the cylindrical wall remote from said base, and wherein said air vent hole is provided in said base and said dropping hole is provided in said lid.

5. A container according to Claim 4 wherein said air vent hole and said dropping hole are coaxial with the axis of said cylindrical wall.

6. A method of using a sample liquid container which comprises a body for accommodating sample liquid, the body having an opening for introducing the sample liquid therein, and a lid being adapted to airtightly close the opening, wherein through the body is provided an air vent hole and through the lid is provided a sample-dropping hole, said method comprising

connecting air vent hole with air feed tube whose other end is closed,

feeding the sample liquid into body through the opening,

closing the opening with the lid,

inverting the container,

fixing the container on a stationary base,

feeding air through the air feed tube into the container, and

dropping sample liquid through the sample-dropping hole.

0297877

# FIG. 1

1-a          1-b          1-c

# FIG. 2

# FIG. 3

0297877

# FIG. 4

24
23
22
25
21
AIR OUT
AIR IN

# FIG. 5

23
A        A        24
23                23
5
C
23       23
22       23
AIR OUT          AIR IN
25
B

# FIG. 6

26a
26
27       28       31
32
ACTUATOR
29
30
DROPING
DEVICE

0297877

FIG. 7

7-a

7-b

FIG. 8

8-a

8-b

8-c

8-d

FIG. 9